# EUROPÄISCHE PATENTSCHRIFT

(11) **EP 3 708 259 B1**
(45) Veröffentlichungstag und Bekanntmachung des Hinweises auf die Patenterteilung: **20.04.2022**
(21) Anmeldenummer: 20168485.9
(22) Anmeldetag: 06.10.2017
(51) Int. Cl.: B05B 1/30, B05B 12/00, B05B 12/02, B05B 12/08, B05B 15/55, A01M 7/00, B05B 1/00, B05B 9/08, B05B 15/40, B05B 15/30

(54) **TRAGBARE SPRITZVORRICHTUNG**
PORTABLE SPRAY DEVICE
DISPOSITIF DE PULVÉRISATION PORTATIF

(30) Priorität: 06.10.2016 EP 16192661
(43) Veröffentlichungstag der Anmeldung: 16.09.2020
(62) Teilanmeldung aus: 17788138.0
(73) Patentinhaber: BASF SE, 67056 Ludwigshafen am Rhein (DE)
(72) Erfinder: NOLTE, Marc, 67117 Limburgerhof (DE); MORAN PUENTE, Diana Westfalia, 67117 Limburgerhof (DE); HENKES, Steffen, 67117 Limburgerhof (DE); KEPES, Christian, 67056 Ludwigshafen (DE); LUDWIG, Lydia, 67117 Limburgerhof (DE); DOERR, Siegfried, 67117 Limburgerhof (DE); KUEHN, Annett, 67117 Limburgerhof (DE); ZITO, Raffaello, 67117 Limburgerhof (DE); STOCKBURGER, Bernd, 71642 Ludwigsburg (DE); REHKUGLER, Rolf, 71404 Korb (DE); MOGILEWSKI, Juri, 70178 Stuttgart (DE)
(74) Vertreter: BASF IP Association

(56) Entgegenhaltungen:
- EP-A1- 2 165 770
- WO-A1-2013/030071
- WO-A2-2010/047800
- US-A1- 2006 273 189

## Beschreibung

Die vorliegende Erfindung betrifft eine tragbare Spritzvorrichtung nach dem Oberbegriff des Anspruchs 1.

Es ist bekannt, Flüssigkeiten mittels einer sogenannten Sprühflasche auszustoßen. Dabei wirkt ein Pumpmechanismus direkt auf die Flüssigkeit, die durch eine Düse ausgestoßen wird. Des Weiteren ist es bei Spritzvorrichtungen bekannt, in einer Kammer, welche die auszustoßende Flüssigkeit aufnimmt, den Luftdruck mittels eines Pumpmechanismus zu erhöhen. Wenn dann ein Auslöser betätigt wird, wird die in der Kammer befindliche Flüssigkeit aufgrund der Druckluft in der Kammer nach außen durch eine Düse herausgespritzt.

Aus der EP 0 462 749 B1 ist eine Sprühpistole bekannt, die mittels eines Handhebels betätigt wird. Die Sprühpistole weist einen Anschluss für eine Flüssigkeitsversorgung auf, über welchen unter Druck stehende Flüssigkeiten der Sprühpistole zugeführt werden. Am Auslassende der Sprühpistole ist eine Auslassdüse vorgesehen, um Flüssigkeit in einem bestimmten Sprühmuster auszustoßen. Zwischen dem Anschluss für die Flüssigkeitsversorgung und der Auslassdüse ist ein Steuerventil vorgesehen, welches mittels eines Auslösers geöffnet werden kann.

In der DE 196 12 524 A1 wird eine Spritzpistole beschrieben, die insbesondere zum Ausstoßen mittel- bis dickviskoser Flüssigkeiten, wie zum Beispiel pastösen Klebemitteln, ausgebildet ist. Der zu applizierende Stoff wird insbesondere flächenmäßig auf ein Flächengebilde aufgetragen. Die Spritzpistole weist einen Stoffzufuhr- und einen Stoffaustrittsstutzen auf. Dazwischen ist eine Kolbenkammer angeordnet, in der ein Kolben hin und her bewegt werden kann. Der Kolben ist mit einem Schalthebel gekoppelt. Durch Betätigung des Schalthebels kann der Durchfluss durch die Kolbenkammer durch Bewegung des Kolbens verschlossen und geöffnet werden. Bei dem Schalthebel ist ein als induktiver Näherungsschalter ausgebildeter Sensorschalter vorgesehen, der bei der Annäherung des Schalthebels bei einem vorgegebenen Näherungszustand den Stofftransport abschaltet. Dabei wird der Treibdruck des Stofftransportes noch abgebaut, ehe der Stofftransportverschluss erfolgt. Auf diese Weise soll ein Nachfließen von Material verhindert werden.

Aus der US 5,441,180 ist eine Spritzpistole bekannt, die insbesondere zum Ausstoßen von Pflanzenschutzmitteln ausgebildet ist. Diese Spritzpistole umfasst ein Reservoir für das auszustoßende Pflanzenschutzmittel. Des Weiteren umfasst die Spritzpistole einen schwenkbaren Auslöser, durch welchen ein Kolben bewegbar ist. Durch die Bewegung des Kolbens wird das Volumen in einer Kammer, in welcher sich das auszustoßende Pflanzenschutzmittel befindet, verkleinert, so dass das Pflanzenschutzmittel ausgestoßen wird. Wenn der Auslöser wieder zurückgeschwenkt wird, wird der Kolben in entgegengesetzter Richtung bewegt, so dass sich das Volumen der Kammer vergrößert. Hierdurch wird ein Unterdruck erzeugt, welcher das Pflanzenschutzmittel aus der Ausstoßöffnung zurücksaugt.

Beim Ausstoßen bzw. Versprühen von landwirtschaftlichen Formulierungen, insbesondere Pflanzenschutzmitteln, mittels einer Spritzvorrichtung ist es besonders wichtig, dass sich die Spritzvorrichtung sicher und einfach handhaben lässt. Die Spritzvorrichtung sollte für den mobilen Einsatz geeignet sein, d.h. sie sollte sich von einer Person leicht tragen lassen. Des Weiteren ist es von besonderer Bedeutung, dass sich das ausgestoßene Fluid, d.h. das Pflanzenschutzmittel, sehr exakt dosieren lässt. Schließlich sollte sich das Pflanzenschutzmittel mittels der Spritzvorrichtung aus einer bestimmten Entfernung genau auf eine gewünschte Fläche auftragen lassen. Dabei sollte gewährleistet sein, dass bei dem Ausstoßvorgang kein Pflanzenschutzmittel in Bereiche gelangen kann, die nicht in Kontakt mit dem Pflanzenschutzmittel kommen sollen. Insbesondere sollte sichergestellt sein, dass es nicht passieren kann, dass der Nutzer in Kontakt mit dem Pflanzenschutzmittel kommt. Außerdem sollte ein Nachtropfen am Ende des Ausstoßvorgangs vermieden werden. Die Spritzvorrichtung sollte insbesondere auch zur Applikation wirkstoffhaltiger Gele, beispielsweise wirkstoffhaltige Gele zur Bekämpfung arthropoder Schädlinge, geeignet sein und eine gezielte Applikation, beispielsweise in Form von Spots oder Bändern/Strängen erlauben. Die Spitzpistole sollte zudem unempfindlich gegenüber Inhomogenitäten des flüssigen Pflanzenschutzmittels sein, wie sie beispielsweise beim Bereitstellen der zur Anwendung eingesetzten Wirkstoffaufbereitung beim Verdünnen der im Handel erhältlichen Wirkstoffkonzentrate mit bzw. in Wasser auf die für die Anwendung gewünschte Konzentration auftreten können.

Hierfür ist in der WO 2013/030071 A1 eine Spritzpistole und ein Verfahren zum Ausstoßen eines Pflanzenschutzmittels beschrieben. Die Spritzpistole weist eine Fluidkammer, eine Spritzöffnung, die mit der Fluidkammer kommuniziert, und eine Druckeinrichtung auf, die mit der Fluidkammer gekoppelt ist und mittels derer ein Druck auf das in der Fluidkammer befindliche Fluid ausübbar ist. Bei der Spritzöffnung ist ein elektrisch ansteuerbares Fluidventil zum Öffnen und Schließen eines Durchgangs von der Fluidkammer zu der Spritzöffnung angeordnet. Dieses Fluidventil ist datentechnisch mit einer elektrischen Steuervorrichtung gekoppelt, mit welcher ein elektrisches Steuersignal zum Öffnen des Fluidventils für ein bestimmtes vorab festgelegtes Zeitintervall und zum Schließen des Fluidventils nach Ablauf des Zeitintervalls erzeugbar ist, so dass ein definiertes Volumen oder ein definiertes Gewicht des Fluids über die Spritzöffnung ausgestoßen wird. Bei einem Ausführungsbeispiel umfasst die Druckeinrichtung einen Zylinder, in dem ein Kolben bewegbar gelagert ist. Durch den Kolben wird der Zylinder fluiddicht in eine Fluidkammer für das auszustoßende Fluid und eine Druckkammer unterteilt. In die Druckkammer wird Druckluft eingeleitet, welche eine Kraft auf den Zylinder ausübt. Ein Drucksensor misst dabei den Druck der Druckluft in der Druckkammer. Gemäß einem anderen Ausführungsbeispiel ist zwischen einer als Leitung ausgebildeten Fluidkammer und einem Fluidreservoir eine Fluidpumpe angeordnet.

Eine Austragvorrichtung ist aus der EP 2 165 770 A1 bekannt.

Bei der Entwicklung der Spritzvorrichtung ergab sich bei bekannten Spritzvorrichtungen das Problem, dass es möglich sein sollte, mit einem Schuss eine sehr geringe Menge der landwirtschaftlichen Formulierung auszustoßen. Dabei sollte das ausgestoßene Volumen nur in sehr engen Grenzen schwanken, selbst wenn die Spritzvorrichtung bei sehr unterschiedlichen Außentemperaturen eingesetzt wird.

Der vorliegenden Erfindung liegt daher die Aufgabe zugrunde, eine Spritzvorrichtung der eingangs genannten Art bereitzustellen, mit der ein sehr geringes Volumen exakt dosiert ausgestoßen werden kann.

Erfindungsgemäß wird diese Aufgabe durch eine Spritzvorrichtung mit den Merkmalen des Anspruchs 1 gelöst. Vorteilhafte Ausgestaltungen und Weiterbildungen ergeben sich aus den abhängigen Ansprüchen.

Die erfindungsgemäße Spritzvorrichtung ist somit dadurch gekennzeichnet, dass sie ein elektrisch ansteuerbares Ventil aufweist, welches zwischen dem Behälter und der Pumpe angeordnet ist und welches datentechnisch mit der Steuervorrichtung gekoppelt ist, wobei in einer ersten Stellung des Ventils Umgebungsluft von der Pumpe angesaugt wird und in einer zweiten Stellung des Ventils Fluid aus dem Behälter angesaugt wird.

Es hat sich herausgestellt, dass der Fluiddruck, welcher in der Applikationsleitung vorliegt und damit an dem Applikationsventil anliegt, besonders wichtig für die exakte Dosierung des ausgestoßenen Fluidvolumens ist. Außerdem hat sich herausgestellt, dass nur dann sehr geringe Fluidvolumina mit einer bestimmten Geschwindigkeit ausgestoßen werden können, wenn ein bestimmter Druck in der Applikationsleitung vorliegt. Durch die Anordnung des Drucksensors in der Applikationsleitung kann sichergestellt werden, dass der in der Applikationsleitung vorliegende Fluiddruck genau erfasst werden kann und das Öffnen des Applikationsventils in Abhängigkeit von diesem Fluiddruck von der Steuervorrichtung gesteuert werden kann.

Gemäß einer Ausgestaltung der erfindungsgemäßen Spritzvorrichtung ist die elektrische Steuervorrichtung datentechnisch mit der Pumpe gekoppelt. Die Pumpe ist mittels der Steuervorrichtung so ansteuerbar, dass bei geschlossenem Applikationsventil ein vorgegebener Fluiddruck bei dem Applikationsventil anliegt. Bei geschlossenem Applikationsventil wird somit der Fluiddruck geregelt. Insbesondere wenn der Fluiddruck unter einen bestimmten Grenzwert abfällt, steuert die Steuervorrichtung die Pumpe so an, dass der Fluiddruck erhöht wird. Es kann insbesondere sichergestellt werden, dass immer ein bestimmter Mindestdruck in der Applikationsleitung vorliegt.

Gemäß einer Ausgestaltung der erfindungsgemäßen Spritzvorrichtung umfasst die Steuervorrichtung einen Speicher zum Speichern eines vorab festgelegten Drucks und einer vorab festgelegten Dauer des Zeitintervalls. Beim Spritzvorgang steuert die Steuervorrichtung dann das Applikationsventil und die Pumpe so an, dass der vorab gespeicherte Druck während des Spritzvorgangs auf das Fluid ausgeübt wird und das Applikationsventil exakt für die gespeicherte Dauer des Zeitintervalls geöffnet wird.

Die Spritzpistole der erfindungsgemäßen Spritzvorrichtung weist insbesondere einen Auslöser, beispielsweise einen elektronischen, manuell betätigbaren Auslöser auf, welcher mit der Steuervorrichtung gekoppelt ist. Durch manuelles Betätigen des Auslösers kann der Auslöser ein elektrisches Steuersignal an die Steuervorrichtung übertragen und damit einen Ausstoßvorgang initiieren. Durch die elektronische Steuerung des Applikationsventils und den elektronischen Auslöser für die Spritzpistole ist es möglich, den mechanischen Aufbau der Spritzvorrichtung sehr einfach zu konstruieren. Dadurch kann man eine Reduktion des Gewichts der Spritzvorrichtung erreichen, was insbesondere bei einem mobilen Einsatz der Spritzvorrichtung vorteilhaft ist. Durch die elektronische Steuerung des Applikationsventils erreicht man, dass der Fluidausstoß sehr genau gesteuert werden kann, was insbesondere beim Ausstoßen von Pflanzenschutzmitteln wichtig ist.

Gemäß einer Weiterbildung der erfindungsgemäßen Spritzvorrichtung ist das Applikationsventil über die Steuervorrichtung so ansteuerbar, dass das definierte Volumen des Fluids, welches über die Spritzöffnung ausgestoßen wird, kleiner als 1 ml ist. Das ausgestoßene Fluidvolumen ist insbesondere kleiner als 0,7 ml und bevorzugt kleiner als oder gleich 0,5 ml. Aus diesen Volumina ergeben sich entsprechende Gewichtsmengen, wenn man von einer bestimmten Dichte des Fluid ausgeht. Dieses Volumen für den Fluidausstoß gilt insbesondere für einen Fluiddruck in einem Bereich von 4 bar bis 10 bar und einer dynamischen Viskosität des Fluids in einem Bereich von 25 mPa.s bis 70 mPa.s bei Temperaturen zwischen -5 °C und 20 °C und einem Schergefälle von 100 s⁻¹. Die Viskosität wurde dabei absolut durch eine Rheologiemessung bestimmt, beispielsweise durch das Verfahren CIPAC MT 192 (Collaborative International Pesticide Analytical Council, Ltd. (CIPAC) Handbook: MT 192 Viscosity of Liquids by Rotational Viscometry; CIPAC, Hatching Green, Harpenden, Hertfordshire, England 2005).

Eine besondere Bedeutung für die erfindungsgemäße Spritzvorrichtung kommt dem Applikationsventil zu. Gemäß einer Ausgestaltung der erfindungsgemäßen Spritzvorrichtung ist das Applikationsventil ein Absperrventil mit einem Absperrkörper zum Schließen des Ventildurchtritts. Das Applikationsventil weist eine Ventilfeder auf, welche zum Schließen des Ventildurchtritts auf den Absperrkörper eine Kraft in Richtung eines Ventilsitzes ausübt. Alternativ kann das Applikationsventil eine Ventilfeder aufweisen, welche zum Öffnen des Ventildurchtritts auf den Absperrkörper eine Kraft in Richtung von einem Ventilsitz weg ausübt. Die Ventilfeder ist insbesondere eine Blattfeder oder eine Federscheibe. Über die Dicke der Blattfeder oder Federscheibe kann die von der Ventilfeder auf den Absperrkörper ausgeübte Kraft beeinflusst werden.

Gemäß einer Weiterbildung der erfindungsgemäßen Spritzvorrichtung weist das Applikationsventil eine Ventilkammer auf, die in Fluidverbindung mit der Applikationsleitung steht. Der Absperrkörper ist relativ zu der Ventilkammer und dem Ventilsitz so angeordnet, dass ein Fluiddruck von Seiten eines in der Ventilkammer befindlichen Fluids den Absperrkörper auf den Ventilsitz drückt. Die von dem Fluid auf den Absperrkörper ausgeübte Kraft wirkt insbesondere parallel zur Bewegungsrichtung des Absperrkörpers in Richtung des Ventilsitzes. Der Fluiddruck in der Ventilkammer unterstützt auf diese Weise ein schnelles Schließen des Ventils.

Um geringe Volumina bei einem Schuss ausstoßen zu können, ist die Nennweite des Applikationsventils von Bedeutung. Bei der erfindungsgemäßen Spritzvorrichtung kann das Applikationsventil eine Nennweite aufweisen, die in einem Bereich von 0,5 mm bis 1,5 mm ist. Die Nennweite ist dabei eine nominale Nennweite. Sie definiert den Durchmesser des kleinsten Querschnitts, den das Fluid im Applikationsventil durchströmt. Der Querschnitt ist insbesondere kreisförmig, so dass sich aus der Nennweite auch der kleinste Querschnitt des Applikationsventils ergibt.

Gemäß einer bevorzugten Weiterbildung der erfindungsgemäßen Spritzvorrichtung ist die Ventilfeder des Applikationsventils so ausgelegt, dass bei einem an dem Applikationsventil anliegenden Fluiddruck in einem Bereich von 4 bar bis 10 bar und einer dynamischen Viskosität des Fluids in einem Bereich von 25 mPa.s bis 70 mPa.s die minimal ansteuerbare Öffnungszeit in einem Bereich von 10 ms bis 60 ms liegt. Die minimal ansteuerbare Öffnungszeit ist in diesem Fall insbesondere in einem Bereich von 12 ms bis 30 ms. Die Öffnungszeit ist dabei das Zeitintervall von dem Zeitpunkt, zu dem der Absperrkörper beginnt, den Ventildurchtritt für das Fluid freizugeben, bis zu dem Zeitpunkt, zu dem der Absperrkörper auf dem Ventilsitz aufsitzt und das Applikationsventil vollständig schließt.

Überraschenderweise wurde festgestellt, dass es mit herkömmlichen Applikationsventilen nicht möglich war, bei den angegeben Randbedingungen zur Viskosität und zum Fluiddruck ausreichend kurze Öffnungszeiten zu realisieren. Aus diesem Grund wurde die Ventilfeder des Applikationsventils so geändert,
dass die gewünschte minimal ansteuerbare Öffnungszeit erreicht werden konnte. Die Ventilfeder wurde stärker ausgelegt. Das heißt, die von der Ventilfeder auf den Absperrkörper zum Schließen des Ventildurchtritts ausgeübte Kraft wurde erhöht, indem die Federkonstante der Ventilfeder erhöht wurde. Überraschenderweise hat sich nämlich herausgestellt, dass bei einem herkömmlichen Applikationsventil das ausgestoßene Fluidvolumen bei einer höheren Viskosität in dem angegebenen Bereich höher war. Üblicherweise führt eine höhere Viskosität des Fluids zu einem geringeren Ausstoßvolumen. Es wird angenommen, dass in dem angegebenen Druckbereich eine zu geringe Federkraft dazu führt, dass das Applikationsventil langsamer geschlossen wird und damit ein größeres Fluidvolumen ausgestoßen wird. Um sehr geringe Ausstoßvolumina zu erzielen, ist es erforderlich die Federkraft zu erhöhen, damit sie den Absperrkörper auch gegen das Fluid mit höherer Viskosität in dem angegebenen Bereich schnell schließen kann und damit eine exakte Dosierung eines sehr geringen Fluidvolumens für den Ausstoß verwirklichen kann. Erfindungsgemäß kann insbesondere die Federkraft der Ventilfeder des Applikationsventils in Abhängigkeit von der Viskosität der auszubringenden Formulierung gewählt werden.

Bei der erfindungsgemäßen Spritzvorrichtung wird die Öffnungszeit nur von dem Applikationsventil bestimmt. Die Einstellung der Federkonstante der Ventilfeder dient nicht der Dosierung, sondern dazu, den Fluidstrom präzise und schnell abzuschneiden, um einen möglichst nachtropffreien Fluidaustritt zu erzielen. Es wird daher ein Druckunterschied bei einem geöffneten Applikationsventil vermieden. Auf diese Weise wird erreicht, dass ein hoher Druck bei der Spritzöffnung anliegt.

Gemäß einer weiteren Ausgestaltung der erfindungsgemäßen Spritzvorrichtung wird die Viskosität der auszubringenden Formulierung erfasst und die Öffnungszeit des Applikationsventils ist von der Steuervorrichtung in Abhängigkeit von der erfassten Viskosität steuerbar. Die Viskosität der auszubringenden Formulierung kann beispielsweise in der Steuervorrichtung gespeichert sein, wobei sie gegebenenfalls vorab von einem Nutzer eingegeben wurde.

Des Weiteren wäre es möglich, im Behälter für das Fluid einen Temperatursensor vorzusehen, der mit der Steuervorrichtung gekoppelt ist. Die Steuervorrichtung könnte dann die Viskosität der auszubringenden Formulierung in Abhängigkeit von der vom Temperatursensor gemessenen Temperatur berechnen. Die Berechnung könnte über eine Tabelle erfolgen, welche vorab durch eine Kalibrierung erzeugt wird. Gemäß einer weiteren Ausgestaltung der erfindungsgemäßen Spritzvorrichtung ist somit im Behälter ein Temperatursensor angeordnet, der mit der Steuervorrichtung gekoppelt ist. Die Steuervorrichtung ist dann ausgebildet, die Viskosität der auszubringenden Formulierung in Abhängigkeit von der vom Temperatursensor gemessenen Temperatur zu berechnen.

Gemäß einer weiteren Ausgestaltung der erfindungsgemäßen Spritzvorrichtung weist das Applikationsventil zumindest einen Elektromagneten auf, mit welchem auf den Absperrkörper eine Kraft zum Öffnen oder Schließen des Applikationsventils ausübbar ist, die entgegen der von der Ventilfeder ausgeübten Kraft wirkt. Bei dem Applikationsventil handelt es sich somit insbesondere um ein 2/2-Wege-Magnetventil. Gegenüber herkömmlichen Applikationsventilen ist in diesem Fall die Spule des Elektromagnets verstärkt, damit eine größere Kraft auf den Absperrkörper ausgeübt werden kann, welcher von der erhöhten Federkraft der Ventilfeder gegen den Ventilsitz gedrückt wird oder von dem Ventilsitz weg gedrückt wird.

Bei dem Applikationsventil handelt es sich insbesondere um ein Ankerventil, bevorzugt um ein Plattenankerventil.

Gemäß einer weiteren Ausgestaltung der erfindungsgemäßen Spritzvorrichtung übt der Absperrkörper beim Schließen des Ventils einen Druck auf das Fluid aus, der um einen Faktor von mindestens 1,2, insbesondere mindestens 2, größer als der vorgegebene Fluiddruck ist.

Der von dem Absperrkörper beim Schließen des Applikationsventils auf das Fluid ausgeübte Druck muss größer als der vorgegebene Fluiddruck sein, um das Applikationsventil zu schließen. Durch den Faktor wird berücksichtigt, dass bei einer hohen Viskosität des Fluids ein noch höherer Druck zum Schließen ausgeübt werden muss, wenn kurze Schaltzeiten des Applikationsventils realisiert werden sollen. Bei einem Ausführungsbeispiel der erfindungsgemäßen Spritzvorrichtung ist der angegebene Mindestwert für den Faktor vorteilhaft, um kurze Schaltzeiten zu realisieren. Der Faktor kann allerdings in Abhängigkeit von der Viskosität des Fluids variieren. er kann insbesondere zusätzlich in Abhängigkeit von der Viskosität des Fluids gewählt werden.

Gemäß einer Weiterbildung der erfindungsgemäßen Spritzvorrichtung ist die Spritzöffnung in einer Hohlkegeldüse angeordnet. Durch die Hohlkegeldüse wird eine definierte Ausstoßcharakteristik des ausgestoßenen Fluids erzeugt. Eine solche Ausstoßcharakteristik ist insbesondere beim Ausbringen einer landwirtschaftlichen Formulierung wichtig, damit das Fluid gezielt auf eine definierte Fläche in einem bestimmten Abstand gesprüht werden kann.

Gemäß einer Ausgestaltung der erfindungsgemäßen Spritzvorrichtung ist der Abstand zwischen dem Applikationsventil und der Spritzöffnung geringer als 15 cm, insbesondere geringer als 10 cm und vorteilhafterweise geringer als 2 cm. Ferner ist das zwischen der Spritzöffnung und dem Applikationsventil befindliche Fluidvolumen geringer als 14 cm³, bevorzugt geringer als 2,8 cm³, weiter bevorzugt geringer als 1,4 cm³ und insbesondere geringer als 0,57 cm³. Besonders bevorzugt ist das Applikationsventil direkt bei der Spritzöffnung angeordnet. Das Applikationsventil wird somit so nah wie möglich bei der Spritzöffnung positioniert. Hierdurch ist es möglich, ein Nachtropfen von Fluid auch dann zu verhindern, wenn viskose oder hochviskose Fluide mittels der Spritzpistole der Spritzvorrichtung ausgestoßen werden.

Unter einer Spritzpistole wird im Sinne der Erfindung ein Gerät verstanden, mit dem ein Fluid durch eine Spritzöffnung ausgestoßen, insbesondere ausgespritzt, ausgesprüht oder vernebelt werden kann. Durch die erfindungsgemäße Spritzpistole kann beim Austritt insbesondere ein Fluidstrahl erzeugt werden.

Gemäß einer Weiterbildung der erfindungsgemäßen Spritzvorrichtung ist die Pumpe eine selbstansaugende Pumpe. Diese Weiterbildung hat den Vorteil, dass die Pumpe sowohl Flüssigkeit als auch Gas fördern kann. Auf diese Weise ist es möglich, dass durch die Leitungen der Spritzvorrichtungen Umgebungsluft geblasen werden kann, um das gesamte in der Spritzvorrichtung befindliche Fluid eines vorherigen Ausstoßvorgangs zu entfernen, damit beispielsweise anschließend ein anderes Fluid, beispielsweise ein anderes Pflanzenschutzmittel, mittels der erfindungsgemäßen Spritzvorrichtung ausgestoßen werden kann oder die Spritzvorrichtung entleert gelagert werden kann.

Die Pumpe kann beispielsweise eine Schwingankerpumpe sein. Eine solche Pumpe ist sehr leicht und weist einen sehr geringen Energiebedarf auf. Dies ist bei einer tragbaren Spritzvorrichtung vorteilhaft, da diese vom Nutzer getragen werden muss und außerdem nicht an eine externe Energieversorgung angeschlossen werden kann.

Bei der Pumpe ist insbesondere ein Temperatursensor angeordnet, welcher die Temperatur der Pumpe erfasst und der datentechnisch mit der Steuervorrichtung gekoppelt ist. Die Steuervorrichtung kann auf diese Weise die Pumpe abschalten, wenn ein Grenzwert für die Temperatur der Pumpe überschritten wurde. Dadurch kann eine Beschädigung der Pumpe aufgrund einer zu hohen Temperatur vermieden werden.

Gemäß einer Weiterbildung der erfindungsgemäßen Spritzvorrichtung ist in der Applikationsleitung ein Pulsationsdämpfer angeordnet. Dieser Pulsationsdämpfer glättet die Druckimpulse, welche von der Pumpe verursacht werden. Bevorzugt ist der Drucksensor in Fließrichtung hinter dem Pulsationsdämpfer angeordnet. Auf diese Weise kann der Drucksensor genauer und mit weniger Schwankungen den Druck in der Applikationsleitung messen.

Die Spritzvorrichtung weist insbesondere eine Schalteinrichtung zum Einstellen eines Betriebsmodus der Spritzvorrichtung auf.

In einem ersten Betriebsmodus steuert die Steuervorrichtung das Ventil so an, dass es in der ersten Stellung ist, so dass Umgebungsluft durch die Applikationsleitung und die Spritzpistole gefördert wird. Ferner steuert die Steuervorrichtung in diesem Fall die Pumpe und das Applikationsventil so an, dass die Umgebungsluft im Dauerbetrieb durch die Applikationsleitung und die Spritzpistole geblasen wird.

In einem zweiten Betriebsmodus steuert die Steuervorrichtung das Ventil, die Pumpe und das Applikationsventil so an, dass das Ventil in der zweiten Stellung ist, bei der Fluid aus dem Behälter angesaugt wird, und dass im Dauerbetrieb Fluid aus dem Behälter durch die Applikationsleitung und die Spritzpistole gefördert wird. Die Applikationsleitung und die Spritzpistole können auf diese Weise mit dem Fluid oder einer anderen Flüssigkeit gespült werden.

In einem dritten Betriebsmodus steuert die Steuervorrichtung das Ventil so an, dass es in der zweiten Stellung ist, d. h. dass Fluid aus dem Behälter angesaugt wird. Ferner werden die Pumpe und das Applikationsventil so angesteuert, dass ein definiertes Volumen des Fluids über die Spritzöffnung ausgestoßen wird, wenn vom Drucksensor erfasst wurde, dass der Fluiddruck oberhalb eines Schwellenwerts liegt. Dieser dritte Betriebsmodus kann nochmals in verschiedene Unterbetriebsmodi unterteilt sein, in denen verschiedene Volumina pro Schuss ausgestoßen werden.

Die tragbare Spritzvorrichtung kann des Weiteren einen Akkumulator aufweisen, welcher zumindest die Steuervorrichtung und die Pumpe mit Energie versorgt. Ferner versorgt der Akkumulator auch den elektronischen Auslöser mit Energie, damit dieser ein Betätigungssignal an die Steuervorrichtung übertragen kann. Des Weiteren können auch alle anderen elektronischen Einheiten der Spritzvorrichtung von diesem Akkumulator mit Energie versorgt werden.

Gemäß einer Ausgestaltung der tragbaren Spritzvorrichtung ist das Gewicht derselben bei leerem Behälter geringer als 15 kg, insbesondere geringer als 12 kg und bevorzugt geringer als 10 kg.

Die Spritzvorrichtung umfasst insbesondere ein als Rucksack ausgebildetes Tragesystem. Beispielsweise weist das Tragesystem einen Hüftgurt und eine Aufnahmeeinrichtung zur Aufnahme zumindest des Behälters, der Steuervorrichtung und der Pumpe auf. Dabei ist eine untere Kante der Aufnahmeeinrichtung insbesondere in vertikaler Richtung auf derselben Höhe wie der untere Rand des Hüftgurts oder oberhalb des unteren Rands des Hüftgurts angeordnet. Auf diese Weise kann gewährleistet werden, dass die Spritzvorrichtung mittels des Tragesystems von einem Nutzer komfortabel getragen werden kann.

Gemäß einer Weiterbildung der erfindungsgemäßen Spritzvorrichtung ist der Behälter lösbar an der Spritzvorrichtung befestigbar. Die Spritzvorrichtung umfasst einen Deckel, durch den eine Entnahmeöffnung des Behälters fluiddicht verschließbar ist. Eine Entnahmeleitung tritt durch den Deckel fluiddicht durch, wobei die Entnahmeleitung mit einem Ende in den Behälter hinein ragt und bei dem anderen Ende außerhalb des Behälters eine Kupplung zum Koppeln mit einer Verbindungsleitung aufweist. Die Entnahmeleitung ist somit als Steigleitung ausgebildet. Für den Druckausgleich des Unterdrucks beim Saugvorgang weist der Deckel z. B. ein Ventilationsventil auf.

Gemäß einer anderen Ausgestaltung der erfindungsgemäßen Spritzvorrichtung ist der Behälter so von der Spritzvorrichtung aufgenommen, dass die von dem Deckel verschlossene Entnahmeöffnung nach unten gerichtet ist, so dass keine Steigleitung erforderlich ist. In diesem Fall ist nur die Kupplung zum Koppeln mit der Verbindungsleitung an einer Öffnung des Deckels befestigt. Auch in diesem Fall weist der Deckel z. B. ein Ventilationsventil für den Druckausgleich des Unterdrucks beim Saugvorgang auf.

Mit der erfindungsgemäßen Spritzvorrichtung können auf diese Weise herkömmliche Transportbehälter für das Fluid, beispielsweise für die landwirtschaftliche Formulierung, insbesondere das Pflanzenschutzmittel, einfach und ohne Umfüllen gekoppelt werden. Der Transportbehälter wird beispielsweise in die Aufnahmeeinrichtung der Spritzvorrichtung eingesetzt, der Originaldeckel wird entfernt und der Deckel mit der Kupplung und ggf. der Entnahmeleitung wird auf den Behälter fluiddicht aufgesetzt, zum Beispiel aufgeschraubt.

Wenn eine Entnahmeleitung verwendet wird, kann an einem Ende der Entnahmeleitung ein beschwerender Hohlkörper, insbesondere ein Glockenkörper, befestigt sein, welcher auf den Boden des Behälters sinkt, wenn dieser mit Fluid gefüllt ist, wobei der Hohlkörper bzw. der Glockenkörper im unteren Bereich, insbesondere auch am unteren Rand, Öffnungen oder Aussparungen zum Durchtritt des Fluids aufweist. Auf diese Weise wird sichergestellt, dass der Behälter bei der Nutzung der erfindungsgemäßen Spritzvorrichtung auch dann vollständig entleert wird, wenn er von einem Nutzer getragen wird, selbst wenn er nicht immer mit dem Boden horizontal ausgerichtet ist.

Die Spritzpistole der erfindungsgemäßen Spritzvorrichtung ist insbesondere als Handteil ausgebildet. Bei der Applikationsleitung kann in diesem Fall eine Befestigungseinrichtung zum lösbaren Befestigen der Applikationsleitung an einem Arm des Nutzers angeordnet sein. Der Nutzer kann auf diese Weise die Spritzpistole, insbesondere den Auslöser der Spritzpistole, mit einem Finger betätigen und gleichzeitig die Spritzöffnung in Richtung der gewünschten Applikationsfläche richten. Durch die Befestigungseinrichtung für die Applikationsleitung wird verhindert, dass die Applikationsleitung knickt oder dadurch beschädigt wird, dass sie zu weit vom Nutzer absteht.

Die Applikationsleitung und/oder die Spritzöffnung, insbesondere die Düse in der Spritzöffnung, sind bevorzugt beheizbar. In diesem Fall kann die Spritzvorrichtung auch bei tiefen Temperaturen, insbesondere unterhalb von 0 °C, eingesetzt werden. Es wird auf diese Weise verhindert, dass das Fluid gefriert.

Die landwirtschaftliche Formulierung, für welche die erfindungsgemäße Spritzvorrichtung insbesondere geeignet ist, enthält insbesondere ein Pflanzenschutzmittel. Pflanzenschutzmittel werden üblicherweise in Form flüssiger Wirkstoffaufbereitungen angewendet. Diese werden in der Regel durch Verdünnen von im Handel üblichen Wirkstoffkonzentraten, wie beispielsweise Suspensionskonzentrate (SC), Öldispersionen (OD), Kapseldispersionen (CS), emulgierbare Konzentrate (EC), dispergierbare Konzentrate (DC), Emulsionen (EW, EO), Suspoemulsionskonzentrate (SE), Lösungskonzentrate (SL), Wasser-dispergierbare und wasserlösliche Pulver (WP und SP), wasserlösliche und Wasser-dispergierbare Granulate (WG, SG) mit bzw. in Wasser bereitgestellt. Daneben finden auch Produkte in Form von Wirkstofflösungen Verwendung, die den Wirkstoff in einer für die Anwendung geeigneten Konzentration enthalten, sogenannte ULV's. Weiterhin werden zur Bekämpfung arthropoder Schädlinge häufig wirkstoffhaltige Gele eingesetzt, die gegebenenfalls vor ihrer Anwendung mit Wasser auf die gewünschte Anwendungskonzentration verdünnt werden. Hier und im Folgenden werden daher die Begriffe "landwirtschaftliche Formulierung" und "Pflanzenschutzmittel" sowohl für flüssige Wirkstoffformulierungen, einschließlich wirkstoffhaltiger Gelformulierungen, mit einer für die Anwendung geeigneten Wirkstoffkonzentration, als auch für flüssige Wirkstoffaufbereitungen, einschließlich verdünnter Gelformulierungen, verwendet, die durch Verdünnen von Wirkstoffkonzentraten erhältlich sind.

Die erfindungsgemäße Spritzvorrichtung kann in den verschiedensten Bereichen des Pflanzenschutzes eingesetzt werden, insbesondere zur Behandlung von Pflanzen, speziell von deren Blättern (Blattapplikation), aber auch zur Behandlung von vermehrungsfähigen Pflanzenmaterialien (Saatgut). Die erfindungsgemäße Spritzvorrichtung eignet sich auch zur Behandlung unbelebter Materialien, insbesondere unbelebter organischer Materialien wie Holz, Stroh, Papier, Leder, Textilien, Kunststoff oder unbelebter anorganischer Materialien wie Glas oder Metall, die mit schädigenden Organismen befallen sind oder vor einem Befall mit schädigenden Organismen wie Pilzen oder Insekten geschützt werden sollen, mit einer flüssigen Wirkstoffzusammensetzung, die einen oder mehrere geeignete Wirkstoffe enthalten. Die erfindungsgemäße Spritzvorrichtung eignet sich zudem auch zur Behandlung von belebten Materialien, insbesondere belebten organischen Materialien wie Holz. Insbesondere kann die Spritzvorrichtung zur Behandlung von Schnittwunden im Holz, z. B. bei Reben im Weinbau, eingesetzt werden. Insbesondere kann das Fluid zum Wundverschluss einer Schnittwunde im Holz zielgerichtet aus kurzem Abstand aufgebracht werden.

Das Pflanzenschutzmittel wird mit der Spritzvorrichtung insbesondere nicht wie bei einer herkömmlichen Anwendung zerstäubt, sondern es wird mit einem kompakten Strahl auf die Zielfläche aufgebracht. Dabei kann die Anwendung auf einen einzelnen Punkt erfolgen (spot application) oder aus der Vorwärtsbewegung ein Band bedecken. Durch die Konsistenz des Pflanzenschutzmittels bleiben die applizierten Mengen an der Zielfläche haften. Das Pflanzenschutzmittel weist daher insbesondere eine hierfür geeignete Viskosität auf.

Im Folgenden wird ein Ausführungsbeispiel der erfindungsgemäßen Spritzvorrichtung im Bezug zu den Zeichnungen im Detail erläutert.
- Figur 1: zeigt ein Schaltbild eines Ausführungsbeispiels der erfindungsgemäßen Spritzvorrichtung,
- Figur 2: zeigt eine Ansicht des Ausführungsbeispiels der erfindungsgemäßen Spritzvorrichtung von hinten,
- Figur 3: zeigt eine Ansicht des Ausführungsbeispiels der erfindungsgemäßen Spritzvorrichtung bei einem Schnitt entlang der Linie C-C der Figur 2,
- Figur 4: zeigt eine Ansicht des Ausführungsbeispiels der erfindungsgemäßen Spritzvorrichtung entlang der Linie B-B der Figur 2,
- Figur 5: zeigt eine Schnittansicht des Behälters des Ausführungsbeispiels der erfindungsgemäßen Spritzvorrichtung und
- Figur 6: zeigt eine Schnittansicht des Applikationsventils des Ausführungsbeispiels der erfindungsgemäßen Spritzvorrichtung.

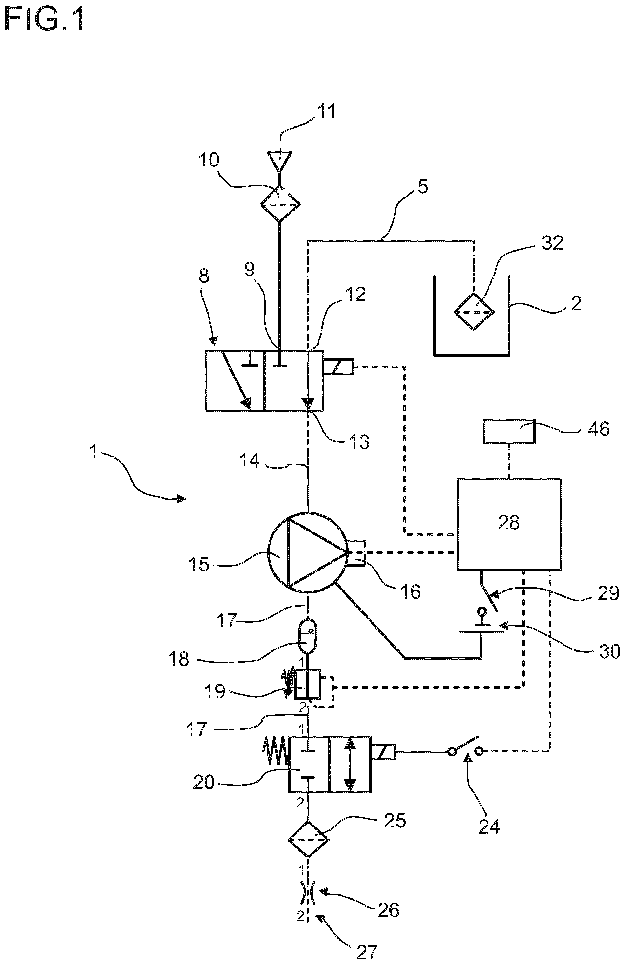

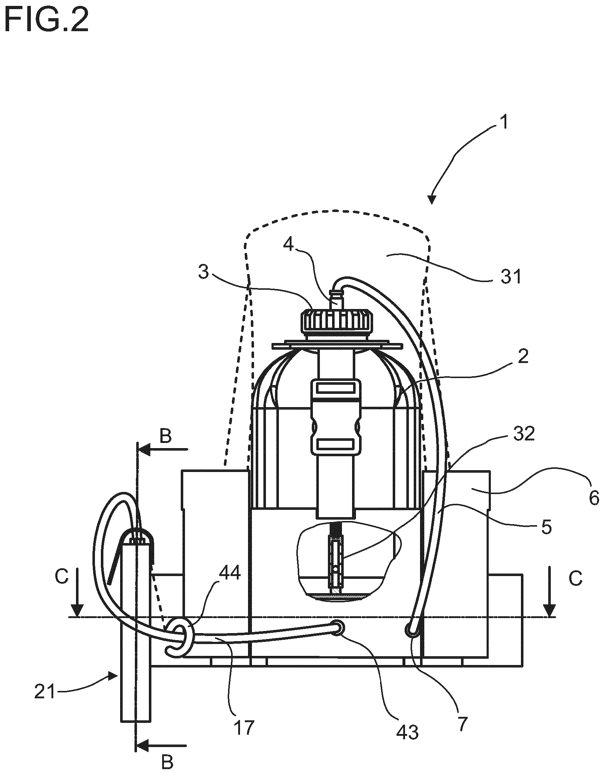

Wie in den Figuren 1 und 2 gezeigt, umfasst die erfindungsgemäße Spritzvorrichtung 1 einen Behälter 2 zur Aufnahme des Fluids. Es handelt sich um einen herkömmlichen Transportbehälter, wie er beispielsweise für Pflanzenschutzmittel verwendet wird. Der Deckel des Transportbehälters 2 wurde jedoch abgeschraubt und durch einen Deckel 3 der Spritzvorrichtung 1 ersetzt. Dieser Deckel 3 schließt eine Entnahmeöffnung des Behälters 2 fluiddicht ab. Der Deckel 3 wiederum weist eine Öffnung auf, durch welche eine als Steigleitung 33 ausgebildete Entnahmeleitung durchtritt. Der Deckel 3 besitzt außerdem ein Ventilationsventil für einen Druckausgleich im Behälter 2, wenn Fluid entnommen wurde.

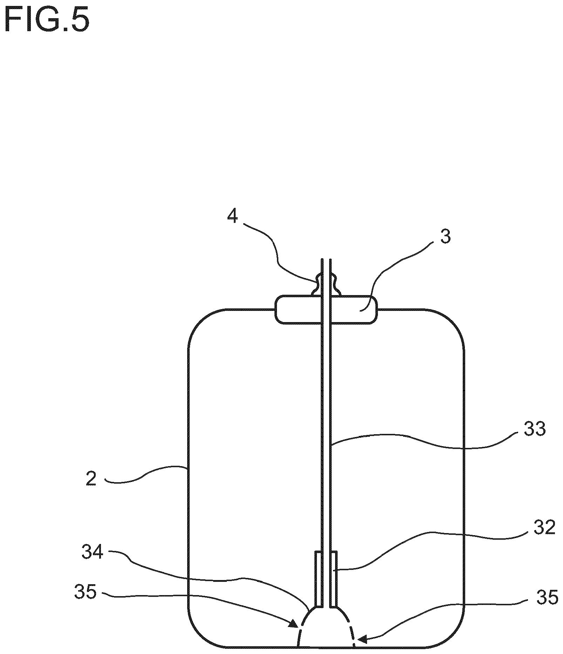

Die Anordnung der Steigleitung 33 ist im Detail in Figur 5 gezeigt. An dem Ende, mit welchem die Steigleitung 33 in den Behälter 2 hineinragt, ist ein Glockenkörper 34 angeordnet, welcher mehrere Öffnungen 35 und/oder Aussparungen aufweist. Zumindest eine der Öffnungen 35 oder Aussparungen ist am unteren Rand des Glockenkörpers 34 angeordnet. Der Glockenkörper 34 besitzt eine Dichte, die dazu führt, dass er bei gefülltem Behälter auf den Boden des Behälters 2 sinkt. Durch die Öffnungen 35 bzw. Aussparungen kann nun vom unteren Teil bzw. vom Boden des Behälters 2 Fluid über den Glockenkörper 35 und einen Filter 32 in die Steigleitung 33 gelangen. Die Steigleitung 33 tritt in Förderrichtung des Fluids dann durch den Deckel 3 fluiddicht hindurch. An dem Ende der Steigleitung 33, welches außerhalb des Behälters 2 angeordnet ist, ist eine Schnellkupplung 4 vorgesehen.

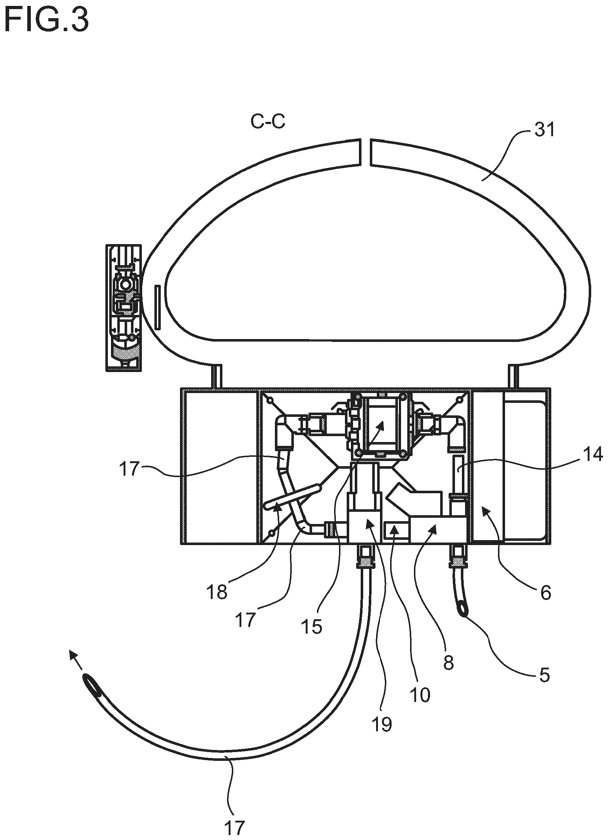

Wie in den Figuren 1 bis 3 gezeigt, ist ein Verbindungsschlauch 5 mit der Schnellkupplung 4 gekoppelt. Der Verbindungsschlauch 5 wird durch eine Öffnung 7 in ein Gehäuse 6 hineingeführt. Dort ist der Verbindungsschlauch 5 mit einem Fluideingang 12 eines 3/2-Wege-Ventils 8 verbunden. Das Ventil 8 weist des Weiteren einen Lufteingang 9 auf, der über einen Filter 10 mit einer Luftöffnung 11 verbunden ist, über die Umgebungsluft angesaugt werden kann. Der Ventilausgang 13 ist über eine Fluidleitung 14 mit einer Pumpe 15 verbunden, welche im vorliegenden Fall eine Schwingankerpumpe ist. Je nach Stellung des Ventils 8 kann somit Fluid aus dem Behälter 2 oder Umgebungsluft über die Luftöffnung 11 angesaugt werden. Die Pumpe 15 ist hierfür selbstansaugend ausgebildet, so dass sie sowohl eine Flüssigkeit als auch ein Gas fördern kann. Die Pumpe 15 steht bei einer entsprechenden Stellung des Ventils 8 in Fluidverbindung mit dem Behälter 2. Sie kann Fluids aus dem Behälter 2 herausfördern.

Bei der Pumpe 15 ist ein Temperatursensor 16 angeordnet, mit welchem die Temperatur der Pumpe 15 gemessen werden kann und durch welchen verhindert werden kann, dass die Pumpe 15 überhitzt.

Am Ausgang der Pumpe 15 ist das erste Ende einer Applikationsleitung 17 angeordnet. In der Applikationsleitung 17 ist in Förderrichtung zunächst ein Pulsationsdämpfer 18 angeordnet, welcher die Druckimpulse des Fluids, welches von der Pumpe 15 gefördert wird, glättet. In Fluidrichtung dahinter ist in der Applikationsleitung 17 ein Drucksensor 19 angeordnet, welcher den Fluiddruck des Fluids in der Applikationsleitung 17 misst.

Wie in Figur 2 gezeigt, tritt die Applikationsleitung 17 hinter dem Drucksensor 19 durch eine Öffnung 43 aus dem Gehäuse 6 aus und wird zu einer Spritzpistole 21 geführt, die als Handteil ausgeführt ist. Zwischen der Öffnung 43 und der Spritzpistole 21 ist eine Befestigungseinrichtung 44 an der Applikationsleitung 17 befestigt, mit welcher die Applikationsleitung 17 lösbar am Arm eines Nutzers befestigt werden kann.

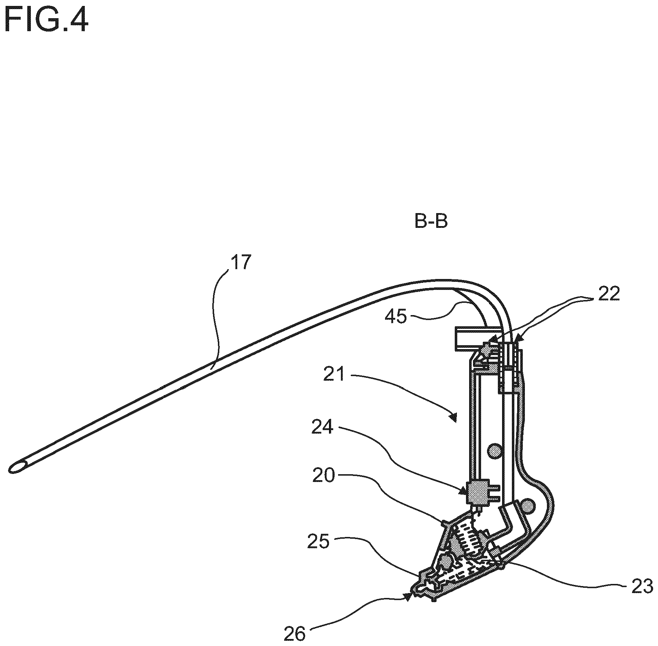

Die Spritzpistole 21 ist im Detail in Figur 4 gezeigt. Es weist eingangsseitig eine Kupplung 22 für den Anschluss der Applikationsleitung 17 auf. Ferner wird über die Kupplung 22 eine elektrische Leitung 45, die an der Applikationsleitung 17 geführt ist, mit der Spritzpistole 21 datentechnisch gekoppelt.

Im Inneren weist die Spritzpistole 21 ein Ventilgehäuse 23 mit einem Applikationsventil 20 auf. Der Aufbau des Applikationsventils 20 wird später im Detail erläutert. Das Applikationsventil 20 ist elektronisch ansteuerbar und hierfür mit der elektrischen Leitung 45 verbunden. Der Eingang des Applikationsventils 20 ist mit der Applikationsleitung 17 verbunden, welche in der Spritzpistole 21 fortgeführt wird. Der Ausgang des Applikationsventils 20 ist über einen Filter 25 mit einer Düse 26 verbunden, welche eine Spritzöffnung 27 aufweist. Das Applikationsventil 20 öffnet und schließt somit einen Durchgang von der der Applikationsleitung 17 zu der Spritzöffnung 27.

Die Düse 26 ist bei diesem Ausführungsbeispiel als Hohlkegeldüse ausgestaltet. Des Weiteren ist das Applikationsventil 20 sehr nah bei der Düse 26 angeordnet. Der Abstand zwischen der Düse 26 und dem Applikationsventil 20 ist im vorliegenden Ausführungsbeispiel kleiner als 2 cm.

Der Drucksensor 19 könnte bei einem anderen Ausführungsbeispiel auch unmittelbar vor dem Applikationsventil 20 in der Applikationsleitung 17 angeordnet sein. In diesem Fall müsste eine weitere datentechnische Verbindung zwischen dem Drucksensor 19 und der Steuervorrichtung 28 über die elektrische Leitung 45 hergestellt werden.

Des Weiteren umfasst die Spritzpistole 21 einen elektronischen, manuell betätigbaren Auslöser 24, welcher auch mit der elektrischen Leitung 45 verbunden ist, jedoch unabhängig von der elektrischen Kopplung des Applikationsventils 20 mit der elektrischen Leitung 45. Die elektrische Leitung 45 ist hierfür beispielsweise mehradrig ausgestaltet.

Wie in Figur 1 gezeigt, umfasst die Spritzvorrichtung ferner eine Steuervorrichtung 28. Sie ist in dem Gehäuse 6 angeordnet und steuert den Ausstoß des Fluids. Hierfür ist die Steuervorrichtung 28 datentechnisch mit dem Ventil 8, der Pumpe 15 sowie dem Temperatursensor 16, dem Drucksensor 19 sowie über den Auslöser 24 mit dem Applikationsventil 20 verbunden. Des Weiteren ist die Steuervorrichtung 28 mit einer Schalteinrichtung 46 zum Einstellen eines Betriebsmodus datentechnisch gekoppelt.

Die Steuervorrichtung 28 kann auf diese Weise die Stellung des Ventils 8 steuern. Des Weiteren kann der Drucksensor 19 den in der Applikationsleitung 17 gemessenen Fluiddruck an die Steuervorrichtung 28 übertragen. Außerdem kann der Temperatursensor 16 die gemessene Temperatur der Pumpe 15 an die Steuervorrichtung 28 übertragen. Des Weiteren kann die Steuervorrichtung 28 bei einer Betätigung des Auslösers 24 das Applikationsventil 20 von einem geschlossenen in einen geöffneten Zustand für ein definiertes Zeitintervall oder dauerhaft versetzen.

In dem Gehäuse 6 der Spritzvorrichtung 1 ist des Weiteren ein Akkumulator 30 untergebracht, welcher alle elektrischen Komponenten der Spritzvorrichtung, sofern notwendig, direkt oder indirekt mit Energie versorgt.

Die Steuervorrichtung 28 ist des Weiteren über einen von der Steuervorrichtung 28 betätigbaren Schalter 29 und über den Akkumulator 30 mit der Pumpe 5 verbunden. Durch ein Schalten des Schalters 29 kann die Steuervorrichtung 28 die Pumpe 15 starten und stoppen.

Wie in den Figuren 1 und 2 gezeigt, umfasst die Spritzvorrichtung 1 des Weiteren ein als Rucksack ausgebildetes Tragesystem 31. Das Tragesystem 31 besitzt eine Aufnahmeeinrichtung für die Aufnahme des Behälters 2. Der Behälter 2 ist fest an dem Tragesystem 31 festgeschnallt. Des Weiteren nimmt die Aufnahmeeinrichtung des Tragesystems 31 das Gehäuse 6 mit den darin befindlichen Komponenten auf.

Das Tragesystem besitzt einen Hüftgurt. Dabei ist eine untere Kante der Aufnahmeeinrichtung insbesondere in vertikaler Richtung auf derselben Höhe wie der untere Rand des Hüftgurts oder oberhalb des unteren Rands des Hüftgurts angeordnet.

Das Gewicht der Spritzvorrichtung 1 ist bei leerem Behälter 2 kleiner als 15 kg, bevorzugt kleiner als 10 kg, so dass der Nutzer die Spritzvorrichtung 1 mittels des Tragesystems 31 auf dem Rücken tragen kann. Dabei ist die Applikationsleitung 17 mittels der Befestigungseinrichtung 44 an seinem Arm befestigt und er hält die Spritzpistole 21 in der Hand. Mit einem Finger kann der Nutzer dann den Auslöser 24 betätigen und die Düse 26 in Richtung der Applikationsfläche richten.

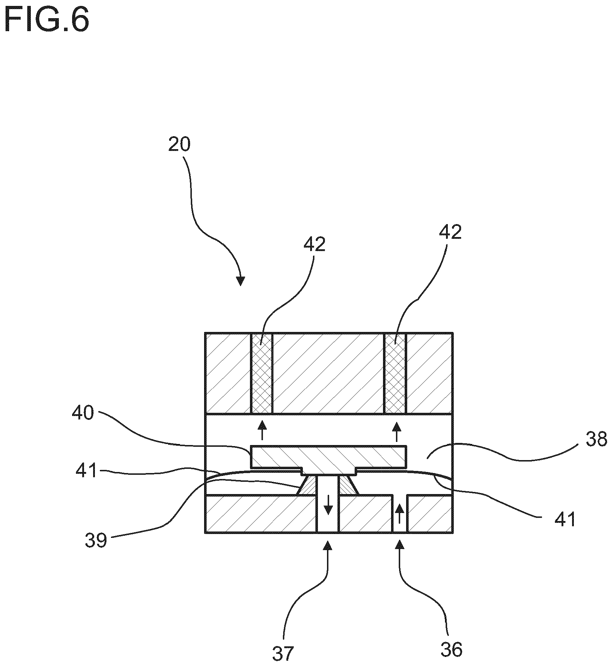

Im Folgenden wird mit Bezug zu Figur 6 das Applikationsventil 20 im Detail erläutert:
Das Applikationsventil 20 ist bei dem vorliegenden Ausführungsbeispiel ein Absperrventil, welches als Plattenankerventil ausgebildet ist. Es weist einen Fluideingang 36 und einen Fluidausgang 37 auf. Über den Fluideingang 36 gelangt Fluid in die Ventilkammer 38. Diese steht in Fluidverbindung mit der Applikationsleitung 17. Zentral in der Ventilkammer 38 ist ein Ventilsitz 39 gebildet, welcher eine Öffnung zum Fluidausgang 37 umschließt. Bewegbar innerhalb der Ventilkammer 38 ist ein als Plattenanker ausgebildeter Absperrkörper 40 angeordnet. Der Absperrkörper 40 ist relativ zu der Ventilkammer 38 und dem Ventilsitz 39 so angeordnet, dass ein Fluiddruck von Seiten eines in der Ventilkammer 38 befindlichen Fluids den Absperrkörper 40 auf den Ventilsitz drückt. Die von dem Fluid auf den Absperrkörper ausgeübte Kraft wirkt insbesondere parallel zur Bewegungsrichtung des Absperrkörpers 40 in Richtung des Ventilsitzes 39. Der Fluiddruck wirkt in Richtung des Schließens des Applikationsventils zu.

Der Absperrkörper 40 ist mit einer Ventilfeder 41 verbunden. Die Ventilfeder 41 ist als scheibenförmige Blattfeder oder Federscheibe ausgebildet. Sie ist so mit dem Gehäuse des Applikationsventils 20 und dem Absperrkörper 40 verbunden, dass sie eine Kraft auf den Absperrkörper 40 in Richtung des Ventilsitzes 39 ausübt. Die Ventilfeder 41 drückt den Absperrkörper 40 somit gegen den Ventilsitz 39, so dass der Durchgang von der Ventilkammer 38 zum Fluidausgang 37 abgedichtet ist.

Des Weiteren umfasst das Applikationsventil 20 einen oder mehrere Elektromagneten mit Magnetspulen 42, welche über die elektrische Leitung 45 mit der Steuervorrichtung 28 und dem Akkumulator 30 verbunden sind. Mittels der Steuervorrichtung 28 kann auf diese Weise eine Spannung an die Magnetspulen 42 angelegt werden, welche dann ein Magnetfeld erzeugen, welches auf den Absperrkörper 40 eine Kraft ausübt, welche entgegengesetzt zu der von der Ventilfeder 42 ausgeübten Kraft ist. Der Absperrkörper 40 besteht hierfür aus einem ferromagnetischen Material.

Wenn keine Spannung an den Magnetspulen 42 anliegt, ist das Applikationsventil 20 somit geschlossen. Wenn Spannung an den Magnetspulen 42 anliegt, wird durch das von den Magnetspulen 42 erzeugte Magnetfeld der Absperrkörper 40 vom Ventilsitz 39 angehoben, so dass das Applikationsventil 20 geöffnet ist. In diesem Fall kann Fluid vom Fluideingang 36 in die Ventilkammer 38 und von dort zum Fluidausgang 37 strömen. Werden die Magnetspulen 42 dann von der Stromversorgung getrennt, so dass keine Spannung mehr an den Magnetspulen 42 anliegt, bewegt sich der Absperrkörper 40 durch die von der Ventilfeder 41 ausgeübte Kraft wieder in Richtung des Ventilsitzes 39 und schließt das Applikationsventil 20 wieder. Die Zeit, welche das Applikationsventil 20 zum Schließen benötigt, hängt zum einen von der Federkonstante der Ventilfeder 41 und zum anderen von der Viskosität des Fluids in der Ventilkammer 38 ab. Es hat sich dabei herausgestellt, dass nur bei einer hohen Federkraft, welche die Ventilfeder 41 auf den Absperrkörper 40 ausübt, sehr kurze Schließzeiten für das Applikationsventil 20 realisiert werden können, wenn viskose Fluide verwendet werden. Nur in diesem Fall können somit auch nur sehr kurze Öffnungszeiten des Applikationsventils 20 realisiert werden.

Alternativ kann die Ventilfeder 41 umgekehrt auch so mit dem Gehäuse des Applikationsventils 20 und dem Absperrkörper 40 verbunden sein, dass sie eine Kraft auf den Absperrkörper 40 in Richtung von dem Ventilsitz 39 weg ausübt. Die Ventilfeder 41 drückt den Absperrkörper 40 dann von dem Ventilsitz 39 weg, so dass der Durchgang von der Ventilkammer 38 zum Fluidausgang 37 geöffnet wird. Wenn in diesem Fall keine Spannung an den Magnetspulen 42 anliegt, ist das Applikationsventil 20 geöffnet, sofern die von dem Fluid ausgeübte Kraft die von der Ventilfeder 41 ausgeübte Kraft nicht übertrifft. Wenn Spannung an den Magnetspulen 42 anliegt, wird durch das von den Magnetspulen 42 erzeugte Magnetfeld der Absperrkörper 40 gegen den Ventilsitz 39 gedrückt, so dass das Applikationsventil 20 geschlossen ist.

Die Viskosität des Fluids liegt dabei beispielsweise in einem Bereich von 25 mPa.s bis 70 mPa.s, gemessen bei Temperaturen zwischen -5 °C und 20 °C und einem Schergefälle von 100 s⁻¹. Die niedrigen Viskositäten dieses Bereichs treten dabei bei den höheren Temperaturen auf, wohingegen die höheren Viskositäten des Bereichs bei den niedrigeren Temperaturen auftreten.

Die Viskosität einer landwirtschaftlichen Formulierung, für welche die erfindungsgemäße Spritzvorrichtung 1 geeignet ist, wurde beispielsweise durch das Verfahren CIPAC MT 192 (Collaborative International Pesticide Analytical Council, Ltd. (CIPAC) Handbook: MT 192 Viscosity of Liquids by Rotational Viscometry; CIPAC, Hatching Green, Harpenden, Hertfordshire, England 2005) bestimmt, wobei ein Rotationsviskosimeter der Fa. Malvern der Serie Kinexus verwendet wurde. Das Viskosimeter ist mit einem Plattenmesssystem ausgestattet. Bei der Messung wurde das Fluid auf das Messsystem gegossen und 30 Sekunden gewartet, bis sich eine definierte Testtemperatur eingestellt hat. Es wurden dann Scherkräfte ausgeübt und auf diese Weise die Viskosität gemessen. Folgende Viskositäten haben sich in diesem Fall bei einem Schergefälle von 100 s⁻¹ ergeben: 30 °C: 19 mPa.s; 25 °C: 21 mPa.s; 20 °C: 23 mPa.s; 15 °C: 26 mPa.s; 10 °C: 30 mPa.s; 5 °C: 34 mPa.s; 0 °C: 41 mPa.s; -5 °C: 48 mPa.s; -10 °C: 60 mPa.s.

Die Federkonstante der Ventilfeder 41 wurde nun so gewählt, dass die minimal ansteuerbare Öffnungszeit des Applikationsventils 20 in einem Bereich von 10 ms bis 40 ms, insbesondere von 20 ms bis 30 ms liegt. Diese Schaltzeiten wurden bei einem Fluiddruck von 6 bar erreicht. Die Dicke der als Federscheibe ausgebildeten Ventilfeder wurde hierfür zu 0,4 mm gewählt. Damit die hierdurch von der Ventilfeder 41 ausgeübte Kraft von den Magnetspulen 42 überwunden werden kann, wurde der Widerstand der Magnetspulen 42 geringer gewählt, um die von dem Magnetfeld auf den Absperrkörper 40 ausgeübte Kraft zu erhöhen. Erfindungsgemäß konnten hierdurch die gewünschten sehr kurzen Öffnungszeiten des Applikationsventils 20 auch bei einem Fluid erreicht werden, auch wenn die Viskosität des Fluid in dem angegebenen Bereich liegt. Die Federkonstante der Ventilfeder 41 ist somit an die Viskosität des Fluids angepasst, welches von der Spritzvorrichtung 1 ausgestoßen werden soll.

Die Nennweite des Applikationsventils 20 ist in einem Bereich von 0,5 mm bis 1,5 mm, im vorliegenden Ausführungsbeispiel lag die Nennweite bei 1 mm. Auf diese Weise wurde erreicht, dass bei einem Fluiddruck in einem Bereich von 4 bar bis 10 bar und der vorstehend genannten dynamischen Viskosität des Fluids bei einem von der Spritzvorrichtung 1 ausgestoßenen Schuss ein Fluidvolumen ausgestoßen wurde, welches kleiner oder gleich 1 ml ist.

Da pro Schuss nur ein sehr geringes Fluidvolumen ausgestoßen wird, ergibt sich nach einem Schuss nur ein sehr geringer Druckabfall in der Applikationsleitung 17. Somit muss die Pumpe 15 nur sehr selten laufen, um den Solldruck aufzubauen. Aus diesem Grund ist der Energieverbrauch der Pumpe 15 sehr gering, so dass der Akkumulator 30 relativ klein dimensioniert werden kann. Dies hat den Vorteil, dass die tragbare Spritzvorrichtung 1 sehr leicht ausgebildet sein kann.

Im Folgenden werden der Betrieb der Spritzvorrichtung 1 und in Verbindung damit weitere Details der Spritzvorrichtung 1 erläutert:
Der Nutzer stellt zunächst mittels der Schalteinrichtung 46 den Betriebsmodus der Spritzvorrichtung 1 ein. In einem ersten Betriebsmodus soll Umgebungsluft durch die Spritzvorrichtung 1 geblasen werden. In diesem Fall steuert die Steuervorrichtung 28 das Ventil 8 so an, dass der Lufteingang 9 mit dem Ventilausgang 13 verbunden ist. Wenn der Nutzer nun den Auslöser 24 betätigt, steuert die Steuervorrichtung 28 die Pumpe 15 durch dauerhaftes Schließen des Schalters 29 im Dauerbetrieb an. Ferner wird das Applikationsventil 20 in eine geöffnete Stellung gebracht, so lange der Auslöser 24 vom Nutzer betätigt ist. Es wird somit Umgebungsluft über die Luftöffnung 11 angesaugt und durch die Applikationsleitung 17, das Applikationsventil 20 und die Düse 26 geblasen. Sobald der Nutzer den Auslöser 24 nicht mehr betätigt, stoppt die Pumpe 15 und das Applikationsventil 20 schließt.

Ferner kann der Nutzer mittels der Schalteinrichtung 46 einen zweiten Betriebsmodus ansteuern. In diesem Fall steuert die Steuervorrichtung 28 das Ventil 8 so an, dass der Fluideingang 12 mit dem Ventilausgang 13 verbunden ist. Wenn der Nutzer den Auslöser 24 betätigt, steuert die Steuervorrichtung 28 die Pumpe 15 so an, dass sie im Dauerbetrieb läuft. Ferner ist das Applikationsventil 20 so lange geöffnet, wie der Nutzer den Auslöser 24 betätigt. In diesem Fall wird Fluid aus dem Behälter 2 über den Filter 32 angesaugt und mittels der Pumpe 15 durch die Applikationsleitung 17 gefördert und bei der Düse 26 ausgestoßen. Dieser zweite Betriebsmodus dient dem Spülen der Spritzvorrichtung 1. Während des Spülens misst der Temperatursensor 16 die Temperatur der Pumpe 15 und überträgt den Messwert intermittierend an die Steuervorrichtung 28. Wenn die von dem Temperatursensor 16 gemessene Temperatur einen zulässigen Grenzwert überschreitet, schaltet die Steuervorrichtung 28 die Pumpe 15 ab.

Wenn der Nutzer nach dem Spülen die Spritzvorrichtung 1 einsetzen will, um eine geringe Menge Fluid auf eine Applikationsfläche, beispielsweise eine beschnittene Weinrebe, zu sprühen, wählt der Nutzer bei der Schalteinrichtung 46 den dritten Betriebsmodus aus. Bei dem dritten Betriebsmodus gibt es noch eine Auswahl für verschiedene Gewichtsmengen des Fluids bzw. Fluidvolumina, die bei einem Schuss ausgestoßen werden. Beispielsweise kann in Abhängigkeit von der Einstellung bei der Schalteinrichtung 46 vorgegeben werden, dass 0,15 g oder 0,2 g oder 0,25 g oder 0,3 g Fluid bzw. die sich bei einer bestimmten Dichte daraus ergebenen Volumina pro Schuss ausgestoßen werden.

In diesem dritten Betriebsmodus steuert die Steuervorrichtung 28 das Ventil 8 so an, dass der Fluideingang 12 mit dem Ventilausgang 13 in Fluidverbindung steht, so dass in dem Behälter 2 befindliches Fluid angesaugt werden kann. Des Weiteren steuert die Steuervorrichtung 28 die Pumpe 15 so an, dass in der Applikationsleitung 17 ein bestimmter Fluiddruck vorliegt. Ist der vom Drucksensor 19 gemessene und an die Steuervorrichtung 28 übertragene Druck geringer als dieser Druck, der beispielsweise 6 bar betragen kann, schaltet die Steuervorrichtung 28 die Pumpe 15 kurzzeitig ein, bis der in der Applikationsleitung 17 vorliegende Fluiddruck dem Solldruck von in diesem Fall 6 bar entspricht.

Durch die Anordnung des Drucksensors 19 in der Applikationsleitung 17 wird sichergestellt, dass am Eingang des Applikationsventils 20 immer ein definierter, von der Steuervorrichtung 28 steuerbarer Fluiddruck anliegt.

Wenn der Nutzer den Auslöser 24 betätigt, bevor dieser Solldruck in der Applikationsleitung 17 vorliegt, verhindert die Steuervorrichtung 28, dass das Applikationsventil 20 geöffnet wird. Wenn jedoch in der Applikationsleitung 17 der Solldruck von 6 bar anliegt, wird beim Betätigen des Auslösers 24 das Applikationsventil 20 für ein vorab festgelegtes Zeitintervall, welches in der Steuervorrichtung 28 gespeichert ist, geöffnet und nach Ablauf dieses Zeitintervalls wieder geschlossen. Es kann alternativ auch ein Solldruckbereich oder ein Mindest-Solldruck in der Steuervorrichtung 28 gespeichert sein. In diesem Fall wird beim Betätigen des Auslösers 24 das Applikationsventil 20 geöffnet, wenn der gemessene Druck in dem Solldruckbereich oder oberhalb des Mindest-Solldruck liegt.

Über die Düse 26 wird dann ein Schuss abgegeben, bei welchem eine exakt definierte Gewichtsmenge bzw. ein exakt definiertes Volumen des Fluids über die Spritzöffnung 27 ausgestoßen wird. Die Länge des Zeitintervalls kann beispielsweise 28 ms sein, wobei in diesem Zeitintervall z. B. 0,3 g Fluid ausgestoßen wird. Wenn der Nutzer bei der Schalteinrichtung 46 ein anderes Fluidvolumen für den Ausschuss ausgewählt hat, wird das Zeitintervall, welches das Applikationsventil 20 beim Betätigen des Auslösers 24 öffnet, entsprechend anders von der Steuervorrichtung 28 angesteuert. Die jeweiligen Öffnungszeiten sind in einem Speicher der Steuervorrichtung 28 gespeichert. Sie wurden vorab mittels einer Kalibrierung für den Fluiddruck und für eine bestimmte Viskosität bestimmt. Die Temperaturen können sich in einem Bereich von -5 °C bis 20 °C bewegen.

Bei einem anderen Ausführungsbeispiel kann die Steuervorrichtung 28 auch die Viskosität des Fluids über eine Messung der Außentemperatur oder der Temperatur in dem Behälter 2 berechnen und das Zeitintervall dann jeweils in Abhängigkeit von der berechneten Viskosität des Fluids ermitteln.

### Bezugszeichenliste:

- 1: Spritzvorrichtung
- 2: Behälter
- 3: Deckel
- 4: Schnellkupplung
- 5: Verbindungsschlauch
- 6: Gehäuse
- 7: Öffnung
- 8: Ventil
- 9: Lufteingang
- 10: Filter
- 11: Luftöffnung
- 12: Fluideingang
- 13: Ventilausgang
- 14: Fluidleitung
- 15: Pumpe
- 16: Temperatursensor
- 17: Applikationsleitung
- 18: Pulsationsdämpfer
- 19: Drucksensor
- 20: Applikationsventil
- 21: Spritzpistole
- 22: Kupplung
- 23: Ventilgehäuse
- 24: Auslöser
- 25: Filter
- 26: Düse
- 27: Spritzöffnung
- 28: Steuervorrichtung
- 29: Schalter
- 30: Akkumulator
- 31: Tragesystem
- 32: Filter
- 33: Steigleitung, Entnahmeleitung
- 34: Glockenkörper
- 35: Öffnungen
- 36: Fluideingang
- 37: Fluidausgang
- 38: Ventilkammer
- 39: Ventilsitz
- 40: Plattenanker. Absperrkörper
- 41: Ventilfeder
- 42: Magnetspulen
- 43: Öffnung
- 44: Befestigungseinrichtung
- 45: elektrische Leitung
- 46: Schalteinrichtung

## Patentansprüche

1. Tragbare Spritzvorrichtung (1) zum Ausstoßen eines Fluids, insbesondere einer landwirtschaftlichen Formulierung, mit
einem Behälter (2) zur Aufnahme des Fluids,
einer Pumpe (15), die mit dem Behälter (2) in Fluidverbindung steht, zum Herausfördern des Fluids aus dem Behälter (2),
einer Spritzpistole (21), die eine Spritzöffnung (27) und ein elektrisch ansteuerbares Applikationsventil (20) zum Öffnen und Schließen eines Durchgangs zu der Spritzöffnung (27) umfasst,
einer Applikationsleitung (17), die eine Fluidverbindung zwischen der Pumpe (15) und der Spritzpistole (21) herstellt,
einem Drucksensor (19), der in der Applikationsleitung (17) angeordnet ist, zum Erfassen des Fluiddrucks in der Applikationsleitung (17) und
einer elektrischen Steuervorrichtung (28), die datentechnisch mit dem Applikationsventil (20) und dem Drucksensor (19) gekoppelt ist, mit welcher in Abhängigkeit von dem mittels des Drucksensors (19) erfassten Fluiddrucks ein elektrisches Steuersignal zum Öffnen des Applikationsventils (20) für ein bestimmtes vorab festgelegtes Zeitintervall und zum Schließen des Applikationsventils (20) nach Ablauf des Zeitintervalls erzeugbar ist, so dass ein definiertes Volumen des Fluids über die Spritzöffnung (27) ausgestoßen wird,
**dadurch gekennzeichnet, dass**
die Spritzvorrichtung (1) ein elektrisch ansteuerbares Ventil (8) aufweist, welches zwischen dem Behälter (2) und der Pumpe (15) angeordnet ist und welches datentechnisch mit der Steuervorrichtung (28) gekoppelt ist, wobei in einer ersten Stellung des Ventils (8) Umgebungsluft von der Pumpe (15) angesaugt wird und in einer zweiten Stellung des Ventils (8) Fluid aus dem Behälter (2) angesaugt wird.

2. Tragbare Spritzvorrichtung (1) nach Anspruch 1, **dadurch gekennzeichnet, dass** die elektrische Steuervorrichtung (28) datentechnisch mit der Pumpe (15) gekoppelt ist und die Pumpe (15) mittels der Steuervorrichtung (28) so ansteuerbar ist, dass bei geschlossenem Applikationsventil (20) ein vorgegebener Fluiddruck bei dem Applikationsventil (20) anliegt.

3. Tragbare Spritzvorrichtung (1) nach Anspruch 1 oder 2, **dadurch gekennzeichnet, dass** das Applikationsventil (20) über die Steuervorrichtung (28) so ansteuerbar ist, dass das definierte Volumen des Fluids, welches über die Spritzöffnung (27) ausgestoßen wird, kleiner als 1 ml ist, insbesondere kleiner als oder gleich 0,5 ml ist.

4. Tragbare Spritzvorrichtung (1) nach einem der vorhergehenden Ansprüche, **dadurch gekennzeichnet, dass** das Applikationsventil (20) ein Absperrventil mit einem Absperrkörper (40) zum Schließen eines Ventildurchtritts ist und das Applikationsventil (20) eine Ventilfeder (41) aufweist, welche zum Schließen des Ventildurchtritts auf den Absperrkörper (40) eine Kraft in Richtung eines Ventilsitzes (39) ausübt.

5. Tragbare Spritzvorrichtung (1) nach einem der Ansprüche 1 bis 3, **dadurch gekennzeichnet, dass** das Applikationsventil (20) ein Absperrventil mit einem Absperrkörper (40) zum Schließen eines Ventildurchtritts ist und das Applikationsventil (20) eine Ventilfeder aufweist, welche zum Öffnen des Ventildurchtritts auf den Absperrkörper (40) eine Kraft in Richtung von einem Ventilsitz (39) weg ausübt.

6. Tragbare Spritzvorrichtung (1) nach einem der vorhergehenden Ansprüche, **dadurch gekennzeichnet, dass** das Applikationsventil (20) ein Plattenankerventil ist.

7. Tragbare Spritzvorrichtung (1) nach einem der vorhergehenden Ansprüche, **dadurch gekennzeichnet, dass** die Pumpe (15) eine selbstansaugende Pumpe ist.

8. Tragbare Spritzvorrichtung (1) nach einem der vorhergehenden Ansprüche, **dadurch gekennzeichnet, dass** die Pumpe (15) eine Schwingankerpumpe ist.

9. Tragbare Spritzvorrichtung (1) nach Anspruch 1, **dadurch gekennzeichnet, dass** die Spritzvorrichtung (1) eine Schalteinrichtung (46) zum Einstellen eines Betriebsmodus der Spritzvorrichtung aufweist.

10. Tragbare Spritzvorrichtung (1) nach Anspruch 9, **dadurch gekennzeichnet, dass** die Steuervorrichtung (28) ausgebildet ist, in einem ersten Betriebsmodus das Ventil so anzusteuern, dass es in der ersten Stellung ist, so dass Umgebungsluft durch die Applikationsleitung (17) gefördert wird.

11. Tragbare Spritzvorrichtung (1) nach Anspruch 9 oder 10, **dadurch gekennzeichnet, dass** die Steuervorrichtung (28) ausgebildet ist, in einem zweiten Betriebsmodus das Ventil so anzusteuern, dass es in der zweiten Stellung ist, bei der Fluid aus dem Behälter angesaugt wird, und dass im Dauerbetrieb Fluid aus dem Behälter durch die Applikationsleitung (17) gefördert wird.

12. Tragbare Spritzvorrichtung (1) nach einem der Ansprüche 9 bis 11,
**dadurch gekennzeichnet, dass** die Steuervorrichtung (28) ausgebildet ist, in einem zweiten Betriebsmodus das Ventil so anzusteuern, dass es in der zweiten Stellung ist, bei der Fluid aus dem Behälter angesaugt wird, und die Pumpe und das Applikationsventil so anzusteuern, dass ein definiertes Volumen des Fluids über die Spritzöffnung ausgestoßen wird, wenn vom Drucksensor erfasst wurde, dass der Fluiddruck oberhalb eines Schwellenwerts liegt.

13. Tragbare Spritzvorrichtung (1) nach einem der vorhergehenden Ansprüche, **dadurch gekennzeichnet, dass** die Spritzvorrichtung (1) ein als Rucksack ausgebildetes Tragesystem (31) umfasst.

14. Tragbare Spritzvorrichtung (1) nach einem der vorhergehenden Ansprüche, **dadurch gekennzeichnet, dass** die Spritzpistole (21) als Handteil ausgebildet ist und bei der Applikationsleitung (17) eine Befestigungseinrichtung (44) zum lösbaren Befestigen der Applikationsleitung (17) an einem Arm eines Nutzers angeordnet ist.

## Claims

1. A portable spraying apparatus (1) for discharging a fluid, in particular an agricultural formulation, having
a container (2) for holding the fluid,
a pump (15), which is fluidically connected to the container (2), for conveying the fluid out of the container (2),
a spray gun (21), which comprises a spray opening (27) and an electrically actuatable application valve (20) for opening and closing a passage to the spray opening (27),
an application line (17), which establishes a fluidic connection between the pump (15) and the spray gun (21),
a pressure sensor (19), which is arranged in the application line (17), for detecting the fluid pressure in the application line (17), and
an electrical control apparatus (28), which is coupled to the application valve (20) and the pressure sensor (19) in terms of data transmission and by way of which, in a manner dependent on the fluid pressure detected by means of the pressure sensor (19), an electrical control signal for opening the application valve (20) for a specific predefined time interval and for closing the application valve (20) after the time interval has elapsed is able to be generated such that a defined volume of the fluid is discharged via the spray opening (27),
wherein
the spraying apparatus (1) has an electrically actuatable valve (8), which is arranged between the container (2) and the pump (15) and which is coupled to the control apparatus (28) in terms of data transmission, wherein, in a first position of the valve (8), ambient air is drawn in by the pump (15) and, in a second position of the valve (8), fluid is drawn in from the container (2).

2. The portable spraying apparatus (1) according to claim 1, wherein the electrical control apparatus (28) is coupled to the pump (15) in terms of data transmission, and the pump (15) is able to be actuated by means of the control apparatus (28) such that, with the application valve (20) closed, a predefined fluid pressure prevails at the application valve (20).

3. The portable spraying apparatus (1) according to claim 1 or 2, wherein the application valve (20) is able to be actuated via the control apparatus (28) such that the defined volume of the fluid which is discharged via the spray opening (27) is less than 1 ml, in particular less than or equal to 0.5 ml.

4. The portable spraying apparatus (1) according to one of the preceding claims, wherein the application valve (20) is a shut-off valve having a shut-off body (40) for closing a valve passage, and the application valve (20) has a valve spring (41), which, for closing the valve passage, exerts a force on the shut-off body (40) in the direction of a valve seat (39).

5. The portable spraying apparatus (1) according to one of claims 1 to 3, wherein the application valve (20) is a shut-off valve having a shut-off body (40) for closing a valve passage, and the application valve (20) has a valve spring, which, for opening the valve passage, exerts a force on the shut-off body (40) in the direction away from a valve seat (39).

6. The portable spraying apparatus (1) according to one of the preceding claims, wherein the application valve (20) is a plate armature valve.

7. The portable spraying apparatus (1) according to one of the preceding claims, wherein the pump (15) is a self-priming pump.

8. The portable spraying apparatus (1) according to one of the preceding claims, wherein the pump (15) is an oscillating armature pump.

9. The portable spraying apparatus (1) according to claim 1, wherein the spraying apparatus (1) has a switching device (46) for setting an operating mode of the spraying apparatus.

10. The portable spraying apparatus (1) according to claim 9, wherein the control apparatus (28) is configured such that, in a first operating mode, it actuates the valve such that said valve is in the first position, with the result that ambient air is conveyed through the application line (17).

11. The portable spraying apparatus (1) according to claim 9 or 10, wherein the control apparatus (28) is configured such that, in a second operating mode, it actuates the valve such that said valve is in the second position, in which fluid is drawn in from the container, and that, under continuous operation, fluid is conveyed through the application line (17) from the container.

12. The portable spraying apparatus (1) according to one of claims 9 to 11, wherein the control apparatus (28) is configured such that, in a second operating mode, it actuates the valve such that said valve is in the second position, in which fluid is drawn in from the container, and actuates the pump and the application valve such that a defined volume of the fluid is discharged via the spray opening if the pressure sensor has detected that the fluid pressure is above a threshold value.

13. The portable spraying apparatus (1) according to one of the preceding claims, wherein the spraying apparatus (1) comprises a carrying system (31) designed as a backpack.

14. The portable spraying apparatus (1) according to one of the preceding claims, wherein the spray gun (21) is designed as a handheld part, and a fastening device (44) for detachably fastening the application line (17) to an arm of a user is arranged on the application line (17).

## Revendications

1. Dispositif de pulvérisation portatif (1) permettant d'expulser un fluide, en particulier une formulation agricole, comprenant
un récipient (2) pour recevoir le fluide,
une pompe (15) en communication fluidique avec le récipient (2) pour débiter le fluide hors du récipient (2),
un pistolet pulvérisateur (21) qui comprend un orifice de pulvérisation (27) et une vanne d'application (20) à pilotage électrique pour ouvrir et fermer un passage vers l'orifice de pulvérisation (27),
un tuyau d'application (17) qui établit une communication fluidique entre la pompe (15) et le pistolet pulvérisateur (21),
un capteur de pression (19) qui est disposé dans le tuyau d'application (17) pour détecter la pression de fluide dans le tuyau d'application (17), et
un dispositif de commande électrique (28) qui est couplé pour la transmission de données avec la vanne d'application (20) et le capteur de pression (19) et qui permet de produire, en fonction de la pression de fluide détectée au moyen du capteur de pression (19), un signal de commande électrique pour ouvrir la vanne d'application (20) pendant un certain intervalle de temps fixé préalablement et pour fermer la vanne d'application (20) après expiration de l'intervalle de temps de sorte qu'un volume défini du fluide est expulsé par l'orifice de pulvérisation (27),
**caractérisé en ce que** le dispositif de pulvérisation (1) présente une vanne (8) à pilotage électrique qui est disposée entre le récipient (2) et la pompe (15) et qui est couplée pour la transmission de données avec le dispositif de commande (28), dans lequel de l'air ambiant est aspiré par la pompe (15) dans une première position de la vanne (8), et le fluide est aspiré hors du récipient (2) dans une deuxième position de la vanne (8).

2. Dispositif de pulvérisation portatif (1) selon la revendication 1, **caractérisé en ce que** le dispositif de commande électrique (28) est couplé pour la transmission de données avec la pompe (15), et la pompe (15) peut être pilotée au moyen du dispositif de commande (28) de telle sorte qu'une pression de fluide prédéfinie est appliquée au niveau de la vanne d'application (20) lorsque la vanne d'application (20) est fermée.

3. Dispositif de pulvérisation portatif (1) selon la revendication 1 ou 2, **caractérisé en ce que** la vanne d'application (20) peut être pilotée par le dispositif de commande (28) de telle sorte que le volume défini du fluide qui est expulsé par l'orifice de pulvérisation (27) est inférieur à 1 ml, en particulier inférieur ou égal à 0,5 ml.

4. Dispositif de pulvérisation portatif (1) selon l'une quelconque des revendications précédentes, **caractérisé en ce que** la vanne d'application (20) présente une vanne d'arrêt dotée d'un corps d'arrêt (40) pour fermer un passage de vanne, et la vanne d'application (20) présente un ressort de vanne (41) qui exerce une force sur le corps d'arrêt (40) en direction d'un siège de vanne (39) pour fermer le passage de vanne.

5. Dispositif de pulvérisation portatif (1) selon l'une quelconque des revendications 1 à 3, **caractérisé en ce que** la vanne d'application (20) est une vanne d'arrêt dotée d'un corps d'arrêt (40) pour fermer un passage de vanne, et la vanne d'application (20) présente un ressort de vanne qui exerce une force sur le corps d'arrêt (40) en direction d'un siège de vanne (39) pour ouvrir le passage de vanne.

6. Dispositif de pulvérisation portatif (1) selon l'une quelconque des revendications précédentes, **caractérisé en ce que** la vanne d'application (20) est une vanne à noyau plat.

7. Dispositif de pulvérisation portatif (1) selon l'une quelconque des revendications précédentes, **caractérisé en ce que** la pompe (15) est une pompe à amorçage automatique.

8. Dispositif de pulvérisation portatif (1) selon l'une quelconque des revendications précédentes, **caractérisé en ce que** la pompe (15) est une pompe à armature oscillante.

9. Dispositif de pulvérisation portatif (1) selon la revendication 1, **caractérisé en ce que** le dispositif de pulvérisation (1) présente un dispositif de commutation (46) pour régler un mode de fonctionnement du dispositif de pulvérisation.

10. Dispositif de pulvérisation portatif (1) selon la revendication 9, **caractérisé en ce que** le dispositif de commande (28) est réalisé pour piloter la vanne dans un premier mode de fonctionnement de telle sorte qu'elle se trouve dans la première position de sorte que l'air ambiant est débité à travers le tuyau d'application (17) .

11. Dispositif de pulvérisation portatif (1) selon la revendication 9 ou 10, **caractérisé en ce que** le dispositif de commande (28) est réalisé pour piloter la vanne dans un deuxième mode de fonctionnement de telle sorte qu'elle se trouve dans la deuxième position dans laquelle le fluide est aspiré hors du récipient, et **en ce qu'**en régime continu, le fluide est débité hors du récipient à travers le tuyau d'application (17).

12. Dispositif de pulvérisation portatif (1) selon l'une quelconque des revendications 9 à 11, **caractérisé en ce que** le dispositif de commande (28) est réalisé pour piloter la vanne dans un deuxième mode de fonctionnement de telle sorte qu'elle se trouve dans la deuxième position dans laquelle le fluide est aspiré hors du récipient, et pour piloter la pompe et la vanne d'application de telle sorte qu'un volume défini du fluide est expulsé par l'orifice de pulvérisation si le capteur de pression a détecté que la pression de fluide se situe au-dessus d'une valeur seuil.

13. Dispositif de pulvérisation portatif (1) selon l'une quelconque des revendications précédentes, **caractérisé en ce que** le dispositif de pulvérisation (1) comprend un système de transport (31) réalisé sous forme de sac à dos.

14. Dispositif de pulvérisation portatif (1) selon l'une quelconque des revendications précédentes, **caractérisé en ce que** le pistolet pulvérisateur (21) est réalisé sous forme de pièce à main, et au niveau du tuyau d'application (17), un dispositif de fixation (44) pour la fixation amovible du tuyau d'application (17) est disposé sur le bras d'un utilisateur.
